# EUROPÄISCHE PATENTSCHRIFT

(11) **EP 2 258 059 B1**
(45) Veröffentlichungstag und Bekanntmachung des Hinweises auf die Patenterteilung: **09.09.2015**
(21) Anmeldenummer: 08873374.6
(22) Anmeldetag: 29.10.2008
(51) Int. Cl.: H01S 3/08, H01S 3/083, H01S 3/30, H01S 1/02, H04B 10/2575, H04B 10/291, H04B 10/50, G02F 1/35, H01S 3/108

(54) **VERFAHREN ZUR ERZEUGUNG ELEKTROMAGNETISCHER TERAHERTZ-TRÄGERWELLEN**
METHOD FOR GENERATING ELECTROMAGNETIC TERAHERTZ CARRIER WAVES
PROCÉDÉ DE PRODUCTION D'ONDES ÉLECTROMAGNÉTIQUES PORTEUSES DE L'ORDRE DU TÉRAHERTZ

(30) Priorität: 20.03.2008 DE 102008015397
(43) Veröffentlichungstag der Anmeldung: 08.12.2010
(73) Patentinhaber: Deutsche Telekom AG, 53113 Bonn (DE)
(72) Erfinder: BREUNIG, Ingo, 53123 Bonn (DE); BUSE, Karsten, 53115 Bonn (DE); KIESSLING, Jens, 53123 Bonn (DE); KNABE, Bastian, 53115 Bonn (DE); SOWADE, Rosita, 53123 Bonn (DE)
(74) Vertreter: Braun-Dullaeus, Karl-Ulrich
(86) Internationale Anmeldenummer: PCT/DE2008/001760
(87) Internationale Veröffentlichungsnummer: WO 2009/115065

(56) Entgegenhaltungen:
- EP-A1- 1 353 218
- EP-A1- 1 715 377
- WO-A-00/42468
- US-A1- 2003 090 767
- US-B1- 7 054 339
- DING Y J: "High-Power Tunable Terahertz Sources Based on Parametric Processes and Applications" IEEE JOURNAL OF SELECTED TOPICS IN QUANTUM ELECTRONICS, IEEE SERVICE CENTER, PISCATAWAY, NJ, US, Bd. 13, Nr. 3, 1. Mai 2007 (2007-05-01), Seiten 705-720, XP011185680 ISSN: 1077-260X
- CZARNY R ET AL: "Continuous wave THz generation based on a dual-frequency laser and a LTG - InGaAs photomixer" MICROWAVE PHOTONICS, 2006. MWP '06. INTERNATIONAL TOPICAL MEETING ON, IEEE, PI, 1. Oktober 2006 (2006-10-01), Seiten 1-3, XP031077886 ISBN: 978-1-4244-0203-8
- HACHE A ET AL: "Quantum Interference Control of Electrical Currents in GaAs" IEEE JOURNAL OF QUANTUM ELECTRONICS, IEEE SERVICE CENTER, PISCATAWAY, NJ, USA, Bd. 34, Nr. 7, 1. Juli 1998 (1998-07-01), XP011051957 ISSN: 0018-9197
- NAOFUMI SHIMIZU ET AL: "CW terahertz-wave source based on photonic millimeter-wave generation and its application for spectroscopic measurement" INFRARED AND MILLIMETER WAVES, 2007 AND THE 2007 15TH INTERNATIONAL CONFERENCE ON TERAHERTZ ELECTRONICS. IRMMW-THZ. JOINT 32ND INTERNATIONAL CONFERENCE ON, IEEE, PISCATAWAY, NJ, USA, 2. September 2007 (2007-09-02), Seiten 895-896, XP031249883 ISBN: 978-1-4244-1438-3

## Beschreibung

Die Erfindung betrifft ein Verfahren zur Erzeugung einer für die drahtlose Übertragung von Daten geeigneten elektromagnetischen Trägerwelle im Frequenzbereich zwischen 0.1 und 10 Terahertz. Die Erfindung betrifft auch ein System zur Umsetzung des Verfahrens.

Seitdem vor etwa 100 Jahren erste Techniken zur drahtlose Datenübertragung eingesetzt wurden, stieg die für die Übertragung zur Verfügung stehende Bandbreite kontinuierlich. Dabei ist die Breite des zur Übertragung nutzbaren Frequenzbandes bekanntermaßen von der Trägerfrequenz abhängig, so dass gilt: Je höher die Trägerfrequenz, desto großer sind die zur Verfügung stehenden Übertragungsbandbreiten. Heutzutage werden Trägerfrequenzen im Bereich zwischen einigen Kilohertz bis hin zu vielen Gigahertz eingesetzt. So arbeitet beispielsweise das sogenannte "Wireless HD" mit einer Trägerfrequenz von 60 GHz und Bandbreiten von 4 Gbit/s. Um Datenraten im Bereich 10 Gbit/s und höher erreichen zu können, werden zukünftig auch Wellen im Terahertzbereich als Träger genutzt werden.

Solche Terahertzwellen werden mittels ultraschneller elektronischer Schaltungen oder mittels optischer Verfahren generiert. Da die elektronischen Verfahren aufgrund der Lebensdauer freier Elektronen und Löcher in ihrer Geschwindigkeit begrenzt sind, arbeiten diese Verfahren oberhalb Frequenzen von 100 GHz, wenn überhaupt, nur noch ineffizient. Die bekannten optischen Verfahren zur Erzeugung von Terahertzwellen bedienen sich hingegen meist zu hoher Frequenzen, die dann durch Frequenzmischung reduziert werden. Eine solche Vorrichtung wird beispielsweise in der Veröffentlichung "High-Power Tunable Terhart Sources Based on Parametric Processes and Applications" (Yujie J. Ding) in IEEE Journal of selected topics in Quantum Electronics, Vol 13, no 3, May/june 2007.

Dabei ist es für die Datenübertragung mit Terahertzwellen nahezu unabdingbar, dass die Trägerfrequenz mit großer Genauigkeit reproduziert werden kann. Damit kann der Empfänger eine Trägerwelle gleicher Frequenz erzeugen, die dann zur Demodulation der einfallenden Welle verwendet wird. Unkontrollierbare zeitliche Schwankungen in der Grundfrequenz der Trägerwelle erschweren die Datenübertragung, da sich der Empfänger dynamisch auf die jeweilige Emissionsfrequenz einstellen muss.

Die EP 1 715 377 A1 sowie die EEP 1 353 218 A1 offenbaren ein Verfahren zur Erzeugung zweier Mischwellen für Herstellung einer Terahertzwellen durch Differenzfrequenzmischung. Dabei wird eine gezielte Ausnutzung der Raman-Streuung für die Erzeugung einer zweiten Mischwelle angesprochen.

Aufgabe der Erfindung ist es, ein Verfahren zu schaffen, mit dem sich Terahertzwellen hoher Frequenzstabilität und guter Reproduzierbarkeit auf einfache und kostengünstige Weise erzeugen lassen. Zudem ist es Aufgabe der Erfindung, ein System zur Umsetzung des Verfahrens zu schaffen.

Diese Aufgaben werden durch das Verfahren mit den kennzeichnenden Merkmalen des Anspruchs 1 und das System nach Anspruch 5 gelöst. Vorteilhafte Ausgestaltungen der Erfindung sind in den jeweiligen Unteransprüchen genannt.

Der wesentliche Grundgedanke der Erfindung liegt darin, einen Sender für Terahertzwellen zu schaffen, der einen oder mehrere Kanäle für die Informationsübertragung wie folgt bereitstellt: Ausgehend von einer ersten elektromagnetischen optischen Welle, nachfolgend "Pumpwelle" genannt, wird unter Ausnutzung eines physikalischen Effektes oder mittels einer speziellen experimentellen Anordnung eine zweite optische Welle generiert, wobei der physikalische Effekt oder die experimentelle Anordnung sich mit der Pumpwelle generierbarer Frequenzen bedienen und keiner extern vorzugebenden "Fremdfrequenzen" im Terahertzbereich bedürfen, so dass die Differenz der Frequenzen der ersten und zweiten optischen Welle fest vorgegeben ist. Durch den Verbleib im Bezugsystem der einen, von der Pumpwelle vorgegebenen Frequenz kann eine besonders hohe Reproduzierbarkeit der Trägerfrequenz erreicht werden, denn Schwankungen der Frequenz der ersten optischen Welle übertragen sich gleichermaßen auf die Frequenz der zweiten optischen Welle; die Differenzfrequenz bleibt aber stabil. Durch den physikalischen Prozess respektive durch die experimentelle Anordnung werden also mindestens zwei für eine spätere Frequenzmischung zu nutzende "Mischwellen" mit definierter Frequenzdifferenz erzeugt, wobei die Pumpwelle selber eine der Mischwellen bilden kann. Alternativ kann die Pumpwelle auch mehrere optische Wellen mit festen Frequenzabständen generieren, und nachfolgend werden diese generierten Wellen gemischt, um eine Welle der Differenzfrequenz zu erzeugen. Wegen des gemeinsamen Ursprungs, der Pumpwelle, stehen auch diese beiden Mischwellen in fester Frequenzbeziehung zueinander.

Im nachfolgenden Prozess werden die beiden Mischwellen erfindungsgemäß miteinander vereint, wobei sich durch Frequenzmischung eine für die Trägerwelle nutzbare Mischfrequenz ergibt. Dabei ist der Prozess der Frequenzmischung ganz allgemein bekannt. Damit aus diesem Prozess eine Trägerwelle im Frequenzbereich zwischen 0.1 und 10 Terahertz entsteht, sind somit zunächst Mischwellen entsprechender Ausgangsfrequenzen zu erzeugen. Durch die erfindungsgemäße Erzeugung der Mischwellen wird sichergestellt, dass die Mischfrequenz reproduzierbar generiert werden kann und geringen zeitlichen Schwankungen unterworfen ist.

Als Pumpwelle bietet sich sichtbares Licht einer Frequenz von etwa (ω_{sichtbar} ≈ 6 × 10¹⁴ Hz = 600 THz an. Um eine Terahertzwelle wohl definierter Frequenz zu erzeugen, insbesondere mit Frequenzschwankungen, die sich innerhalb eines Kanalabstandes von etwa 10 MHz bewegen, müsste im Fall einer Differenzfrequenzmischung unabhängiger Wellen der Frequenzen ω_{sichtbar,1} und ω_{sichtbar,2} deren Frequenz mit einer absoluten Genauigkeit besser als 10 MHz/600 THz ≈ 10⁻⁸ eingestellt werden. Das wäre ein nahezu unüberwindlicher Aufwand. Mit der erfindungsgemäßen Vorgehensweise, die sich zweier gewissermaßen "frequenzgekoppelter" Wellen bedient, lässt sich eine solche Genauigkeit bequem erreichen.

Erfindungsgemäß wird dabei zunächst eine kohärente Pumpwelle der Frequenz ω_{sichtbar,1} generiert. Diese Welle wird dann mit Hilfe eines Wandlungsprozesses teilweise in eine Mischwelle der Frequenz ω_{sichtbar,2} umgewandelt, wobei der eingesetzte Wandler einen physikalischen Prozess oder eine experimentelle Anordnung nutzt, die, wie oben dargelegt, eine feste Frequenzverschiebung vorgeben. Als Beispiel für einen solchen physikalischen Prozess kann insbesondere die Raman-Streuung dienen.

Die besondere Vorteile des erfindungsgemäßen Verfahrens sind einerseits, dass die absolute Frequenz ω_{sichtbar,1} der Pumpstrahlung und die Schwankungen dieser Pumpfrequenz für die resultierende Frequenz der Terahertzwelle unwesentlich sind. Daher lassen sich mit diesem Verfahren in ganz verschiedenen Geräten, insbesondere in Sender und Empfänger, unabhängig voneinander Terahertzwellen gleicher Frequenz erzeugen. Ein weiterer Vorteil ist, dass sich die Frequenz der erzeugten Terahertz Trägerwelle zeitlich nicht signifikant ändert, wie es der Fall wäre, wenn diese durch zwei unabhängige Laserlichtquellen erzeugt würde. Das hat den großen Vorteil, dass der Empfänger sich fest auf eine Frequenz einstellen kann und nicht dynamisch Schwankungen der Frequenz der Terahertzträgerwelle folgen muss. Natürlich können auf die erfindungsgemäß erzeugten Terahertz-Trägerwellen mittels der bekannten Verfahren Informationen aufmoduliert werden, die eine Übertragung von Daten ermöglichen. Beispiele sind Amplituden-, Frequenz-, Phasen- und Polarisationsmodulation.

Abschließend sei noch erwähnt, dass die Erfindung es ermöglicht, für den Terahertzbereich Normungen durchzuführen, in dem solcherart wohldefinierte Terahertzfrequenzen vorgegeben werden, die über physikalische Prozesse oder optische Anordnungen reproduzierbar erreichbar sind.

Das erfindungsgemäße Verfahren wird nachfolgend anhand der Figuren 1 bis 4 erläutert. Die Figuren zeigen:
- **Figur 1**: gemessene Raman-Spektren,
- **Figur 2**: eine Anordnung mit Flüstergaleriemodenresonator,
- **Figur 3**: zwei Anordnungen mit Lasern und
- **Figur 4**: Verteilung von Spektrallinien.

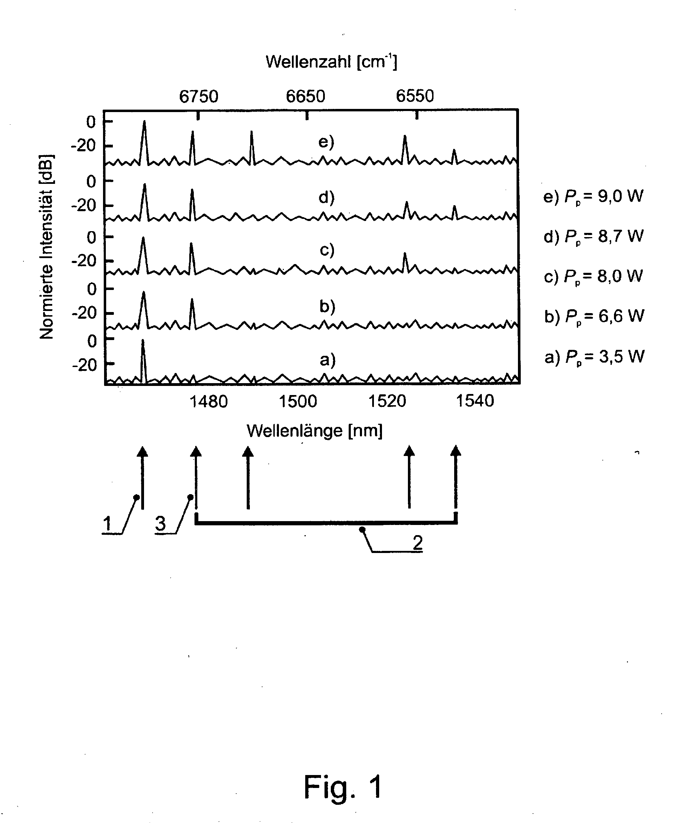

Figur 1 zeigt gemessene Raman-Spektren von Lithiumniobat-Kristallen, wie sie an sich auch ähnlich aus der Literatur bekannt sind. Dabei führt die Beleuchtung des Kristalls mit einer Pumpwelle 1 der Frequenz ω_{sichtbar,1} im sichtbaren Bereich zur teilweisen Umwandlung der Pumpwelle 1 in Wellen anderer Frequenzen, nämlich den Raman-Linien 2. Diese können zusammen mit der Pumpwelle als Mischwellen genutzt werden. Die Frequenzverschiebung des Raman-Effektes rührt daher, dass die Photonen der Pumpwelle 1 die Energie von Gitterschwingungen des Kristalls (Phononen) aufnehmen oder abgeben. Wie ein interner Oszillator haben diese Gitterschwingungen eine präzise Frequenz. Die in Figur 1 gezeigten Spektren liefern mehrere Möglichkeiten, geeignete Wellen mit Frequenzen ω_{sichtbar,2} zu erzeugen, so dass die Differenzfrequenz ω_{sichtbar,1} - ω_{sichtbar,2} im Terahertz-Bereich liegt. Dabei ist es generell unerheblich, ob wie hier die Stokes-Linie oder die Anti-Stokes-Linie der Raman-Streuung als Mischwelle genutzt wird.

Exemplarisch ist die Differenzfrequenz zwischen der fundamentalen Pumpwelle 1 und der ersten Raman-Linie 3 eingezeichnet, die ca. 1,2 THz beträgt. Das gezeigte Spektrum wurde mit einem periodisch gepolten Lithiumniobat-Kristall in einem optischen parametrischen Oszillator erzeugt. Die Kristalltemperatur betrug T = 65 °C und die Periodenlänge der Kristallstruktur A = 29.5 µm. Bei den Spektren a)-e) wurde die Pumpleistung des optischen parametrischen Oszillators erhöht, so dass auch die Leistung der Pumpwelle anstieg. Mit ansteigender Leistung sind immer mehr Raman-Linien 2 zu erkennen.

Bemerkenswert ist, dass die Raman-Linien 2 von ähnlicher Intensität wie die der verbleibenden Pumpwelle 1 sein können. Mit derart intensiven Raman-Linien kann in einem nichtlinear-optischen Element durch Differenzfrequenzbildung zweier solcher Mischwellen die eigentliche Terahertzwelle generiert werden. Liegen die Wellen der Frequenzen ω_{sichtbar,1} und ω_{sichtbar,2} in ähnlicher Leistung vor, so ist das mit hoher Effizienz möglich.

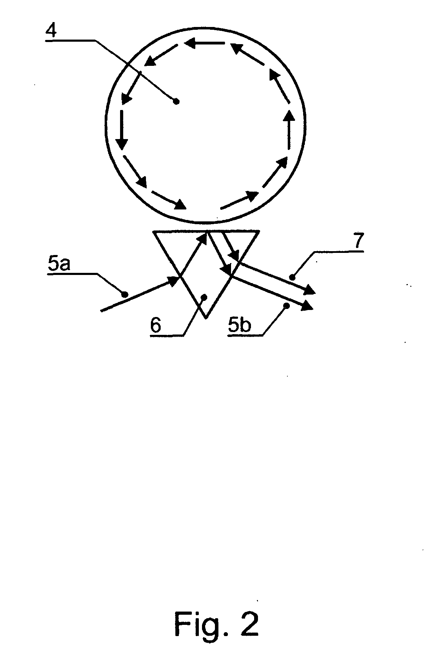

Da der Raman-Effekt nur bei großen Lichtleistungen auftritt, wird das nichtlineare Material, welches den Raman-Effekt zeigt, vorteilhafterweise in einem Resonator platziert, um die Intensität des Lichts zu erhöhen. Dies kann ein optisch parametrischer Oszillator sein. Andere Resonatoren ohne optische parametrische Prozesse sind ebenfalls geeignet; wobei eine hohe "Finesse" des Resonators, die ein Maß für die Überhöhung der Lichtintensität ist, zu bevorzugen ist. Besonders vorteilhaft sind die in Figur 2 gezeigten Flüstergaleriemodenresonatoren 4. Diese werden von runden Scheiben gebildet, in denen das Licht auf Grund der Totalreflexion gefangen gehalten wird. So kann eine Pumpwelle 5a mit Hilfe eines Prismas 6 in den Flüstergaleriemodenresonator 4 eingekoppelt werden, in dem dann aufgrund des Raman-Prozesses neben der Pumpwelle 5b eine Raman-verschobene zusätzliche Linie 7 entsteht. Mit dem Prisma 6 kann neben einem Teil der Pumpwelle 5b auch die Raman-verschobene Linie 7 ausgekoppelt werden. Nachfolgend erfolgt dann wie oben beschrieben mit einem separaten nichtlinearen Element die Generation der eigentlichen Terahertzstrahlung. Dafür können z. B. nichtlinear-optische Kristalle und Photomischer eingesetzt werden.

Flüstergaleriemodenresonatoren lassen sich kompakt realisieren. Die hohe Finesse dieser Resonatoren führt dazu, dass in den Resonatoren bereits bei wenigen Milliwatt Pumpleistung mehrere Watt an Licht oszillieren können, was zur Erzeugung von Raman-Effekten ausreicht. Somit können mit Laserdioden von einem Watt Ausgangsleistung mehrere Kilowatt Lichtleistung in den Resonatoren erzielt werden. Damit ist eine solche Anordnung besonders geeignet, um mit Laserdioden betrieben zu werden. So sind Laserdioden mit einzelnen Emittern, die Licht der Wellenlängen 808 nm, 880 nm und 976 nm erzeugen, in dieser Leistungsklasse erhältlich.

In einer vorteilhaften Anordnung kann in den Resonator das Element zur Differenzfrequenzmischung integriert werden, das dann aus den Mischwellen 7 und 5b die eigentliche Terahertz-Trägerwelle generiert. Damit entfällt die Notwendigkeit, anderes Licht als die Terahertzwelle aus dem Resonator auszukoppeln. Dafür bietet es sich an, den Resonator z. B. aus einem nichtlinear-optischen Kristall wie Lithiumniobat auszuführen. Figur 1 zeigt ja einige Raman-Linien dieses Materials, welches zusätzlich eine sogenannte χ⁽²⁾-Nichtlinearität zeigt, die verwendet werden könnte, um simultan im Resonator durch Mischung der Wellen 7 und 5b die gewünschte Terahertzwelle zu erzeugen. Notwendig ist dafür eine Phasenanpassung. Diese kann hier durch periodische Polung des Kristalls erreicht werden, was als Quasi-Phasenanpassung bezeichnet wird.

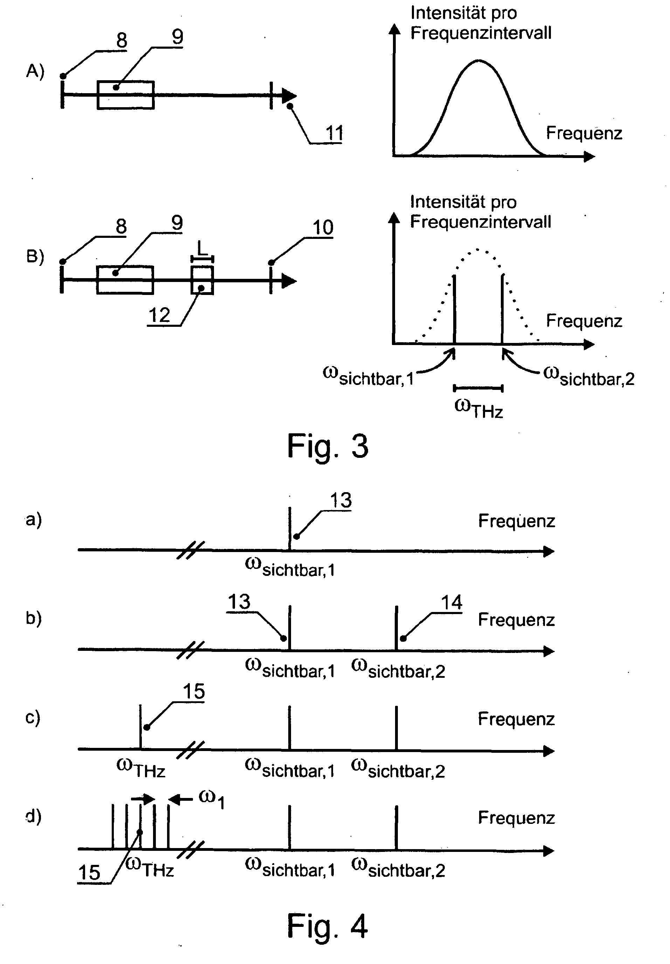

Zur Umsetzung des erfindungsgemäßen Verfahrens sind auch optische Anordnungen geeignet, die wohldefiniert zwei Wellen der Frequenzen ω_{sichtbar,1} und ω_{sichtbar,2} im infraroten, sichtbaren oder ultravioletten Spektralbereich erzeugen, deren Differenzfrequenz dann im Terahertzbereich liegt. Ein Beispiel für eine solche Anordnung zeigt Figur 3: Dabei handelt es sich um einen Laserprozess, der ein breites Emissionsspektrum aufweist (rechter Teil von Figur 3A). Ein solcher Laser weist einem rückwärtigen Spiegel 8, ein laseraktives Medium 9 und einem Auskoppelspiegel 10 auf. Dabei kann auch das eine Ende des laseraktiven Mediums 9 den Endspiegel 8 aufgrund der Fresnel-Reflektivität oder einer zusätzlichen Beschichtung darstellen. Die spektrale Bandbreite des Laserstrahles 11 umfasst mehr als ein Nanometer.

Wird in diesen Laser ein zusätzlicher Resonator 12 der Länge L eingebracht (Figur 3B), so können nur die Lichtwellen anschwingen, die auch für diesen Resonator resonant sind. Weist das Material, aus dem der Resonator besteht, den Brechungsindex n auf, so beträgt der Frequenzabstand der Longitudinalmoden des kurzen Resonators Δω = πc₀/(Ln²), wobei c₀ für die Vakuumgeschwindigkeit des Lichts steht. Um Δω/2π = 1 THz zu erreichen, ist bei n = 1.5 (Glas) ein L von ungefähr 0.42 mm nötig. Eine Feinabstimmung der Resonatorlänge kann beispielsweise bei Resonatoren aus Glas oder anderen dielektrischen Materialien über die Temperatur vorgenommen werden, da sowohl L als auch n von der Temperatur abhängen. Auf diese Weise werden aus dem breiten Frequenzspektrum definierte Linien ω_{sichtbar,1} und ω_{sichtbar,2} mit stabilem Frequenzunterschied ω_{THz} herausgeschnitten, die erfindungsgemäß als Mischwellen genutzt werden, um durch Frequenzmischung eine Teraherz-Trägerfrequenz zu erzeugen.

Vorteilhafterweise ist das Emissionsspektrum des Lasers ohne Resonator (Figur 3A) etwa doppelt so breit wie der Modenabstand Δω. Die Dicke des Resonators, die sich mit hoher Genauigkeit und Reproduzierbarkeit kontrollieren lässt, gibt die Differenzfrequenz Δω fest vor. Kleine Temperaturänderungen des Resonators können aufgrund der oben erwähnten Temperaturabhängigkeit von L und n zusätzlich dafür sorgen, dass zwei Moden anschwingen, die symmetrisch zum Maximum der Verstärkung liegen, so wie es das Spektrum in Figur 3B schematisch zeigt.

Ist das laseraktive Material beispielsweise ein Halbleiter, der Licht der Wellenlänge 800 nm emittiert, so passen im oben genannten Zahlenbeispiel mehr als 1500 Wellen in den Resonator. Das bedeutet, dass eine temperaturinduzierte relative Längenänderung von weniger als 0.001 ausreicht, um die beiden Moden optimal anschwingen zu lassen. Unbeschadet dessen kann die Terahertz-Differenzfrequenz mit einer Genauigkeit von mindestens 0.1 % eingestellt werden. Liegen schließlich die beiden gewünschten Wellen vor, so kann nachfolgend abermals mit Hilfe eines nichtlinear-optischen Elements aus den beiden generierten Wellen die Terahertzwelle erzeugt werden.

Figur 4 fasst die Prozesse noch einmal zusammen: Im ersten Schritt a) wird Pumplicht 13 der Frequenz ω_{sichtbar,1} generiert, wobei hierbei keine besonderen Anforderungen an die Genauigkeit der Frequenz gestellt werden, so dass als Quellen auch Hochleistungslaserdioden in Frage kommen. In Schritt b) wird mit Hilfe eines Wandlers, der ein physikalischer Prozess oder eine experimentelle Anordnung sein kann, ein Teil des Pumplichts 13 in der Frequenz wohldefiniert geändert, so dass neben der vom Pumplicht gebildeten Mischwelle eine weitere Mischwelle 14 der Frequenz ω_{sichtbar,2} entsteht. Dabei kann der Raman-Effekt ein geeigneter Prozess sein.

Alternativ können, wie oben beschriebenen, die Mischwellen 13 und 14 wohldefinierter Frequenz mit einem zwei Wellen unterschiedlicher Frequenzen emittierenden Laser erzeugt werden, so dass mit dem Schritt b) begonnen werden kann. Der mit einem Resonator versehene Laser dient hier als Wandler.

Im nächsten Schritt c) wird mit einem Frequenzmischer, der insbesondere eine Differenzfrequenzmischung bewirkt, das gewünschte Terahertzlicht 15 der Frequenz ω_{THz} generiert, das als Trägerwelle herhalten kann. Letztendlich wird die Trägerwelle in Schritt d) durch einen Modulator geschickt, der Seitenbänder 16 im Frequenzabstand ω₁ erzeugen könnte, jedoch vor allem dazu dient, Informationen auf die Trägerwelle 15, aufzuprägen.

## Patentansprüche

1. Verfahren zur Erzeugung einer für eine drahtlose Übertragung von Daten geeigneten elektromagnetischen Trägerwelle (15) im Frequenzbereich zwischen 0.1 und 10 Terahertz,
dass mittels einer elektromagnetischen Pumpwelle (1,5,13) in einem Erzeugungsprozess mindestens zwei Mischwellen (1,2,3,5,7,13,14) mit definierter Frequenzdifferenz erzeugt werden, wobei die Pumpwelle (1,5,13) selber eine der Mischwellen (1,2,3,5,7, 13,14) bilden kann, wobei die Trägerwelle (15) durch Frequenzmischung, insbesondere durch Differenzfrequenzmischung, aus den frequenzgekoppelten Mischwellen (1,2,3,5,7,13,14) erzeugt wird,
**dadurch gekennzeichnet,**
**dass** zumindest eine der Mischwellen (1,2,3,5,7,13,14) durch einen von der Pumpwelle (1,5,13) angeregten optisch nichtlinearen Erzeugungsprozess, nämlich die innerhalb eines nichtlinearen Kristalls (4) stattfindende Raman-Streuung, erzeugt wird, wobei eine der Ramanlinien (2,3,7,14) als eine reproduzierbar in der Frequenz verschobene zweite Mischwelle genutzt wird, und
**dass** der Kristall einer Phasenanpassung derart unterzogen wird, dass der Kristall als Resonator wirkt und in dem Kristall zugleich die Differenzfrequenszmischung stattfindet.

2. Verfahren nach Anspruch 1,
**dadurch gekennzeichnet,**
**dass** die Frequenz der Pumpwelle (1,5,13) im oder nahe am Frequenzbereich des sichtbaren Lichtes liegt.

3. Verfahren nach Anspruch 1 oder 2,
**dadurch gekennzeichnet,**
**dass** als Anordnung zur Erzeugung der Mischwellen ein Laserprozess genutzt wird, in den ein weiterer Resonator (12) eingebracht ist, wobei der Laserprozess zwei Lichtwellen mit einem Frequenzabstand zwischen 0.1 und 10 THz erzeugt.

4. Verfahren nach einem der vorherigen Ansprüche,
**dadurch gekennzeichnet,**
**dass** zur Informationsübertragung mittels Amplituden- oder Frequenz- oder Phasen- oder Polarisationsmodulation Information auf die Trägerwelle (15) moduliert wird.

5. Anordnung zur Durchführung des Verfahrens nach einem der vorherigen Ansprüche, umfassend
eine Laserquelle zur Erzeugung einer Pumpwelle (1,5,13),
einen Wandler zur Erzeugung mindestens zweier Mischwelle (1,2,3,5,7,13,14) definierter Frequenzdifferenz auf der Basis der Pumpwelle (1,5,13), wobei die Pumpwelle (1,5,13) eine der Mischwellen (1,2,3,5,7,13,14) bilden kann, wobei der Wandler einen optisch nichtlinearen Kristall aufweist, in dem die Pumpwelle Raman-Streuung erzeugt,
**dadurch gekennzeichnet,**
**dass** der Kristall ein Resonator ist, in den ein
Frequenzmischer zur Mischung der Mischwellen (1,2,3,5,7,13,14) zu einer im Frequenzbereich zwischen 0.1 und 10 Terahertz liegenden Trägerwelle (15) integriert ist, und
**dass** der Kristall einer Phasenanpassung derart unterzogen ist, dass der Kristall als Resonator wirkt und in dem Kristall zugleich die Differenzfrequenszmischung stattfindet.

6. Anordnung nach Anspruch 5,
**dadurch gekennzeichnet,**
**dass** die Laserquelle Laserlicht mit einer Frequenz im oder nahe am sichtbaren Bereich erzeugt.

7. Anordnung nach Anspruch 5 oder 6,
**dadurch gekennzeichnet,**
**dass** Laserquelle und Wandler in einem Laser vereint sind, in dessen Strahlengang sich ein Resonator (12) befindet.

## Claims

1. A method for producing an electromagnetic carrier wave (15) suitable for a wireless transmission of data in the frequency range between 0.1 and 10 terahertz,
that in a generation process by means of an electromagnetic pump wave (1, 5, 13) at least two mixing waves (1, 2, 3, 5, 7, 13, 14) are produced having a defined frequency difference,
wherein said pump wave (1, 5, 13) itself can form one of the mixing waves (1, 2, 3, 5, 7, 13, 14),
wherein the carrier wave (15) is generated by frequency mixing, in particular by difference frequency mixing, from the mixing waves (1, 2, 3, 5, 7, 13, 14),
**characterized in**
**that** at least one of the mixing waves (1, 2, 3, 5, 7, 13, 14) is generated by an optically nonlinear generation process excited by the pump wave (1, 5, 13), namely the Raman scattering occurring within a non-linear crystal (4), wherin one of the Raman lines (2, 3, 7, 14) is used as a second mixing wave, which is reproducible shifted in frequency, and
**that** the crystal is subject to a phase matching in such a manner, that the crystal operates as a resonator and difference frequency mixing occurs within the crystal at the same time.

2. Method according to claim 1,
**characterized in**
**that** the frequency of the pump wave (1, 5, 13) lies in or close to the frequency range of the visible light.

3. Method according to claim 1 or 2,
**characterized in,**
**that** as an arrangement for generating the mixing waves a laser process is used, in which a further resonator (12) is introduced, wherein the laser process generates two light waves having a frequency spacing between 0.1 and 10 THz.

4. Method according to one of the preceding claims,
**characterized in,**
**that** for information transmission information is modulated onto the carrier wave (15) by means of amplitude or frequency or phase or polarization modulation.

5. Arrangement for conducting the method according to one of the preceding claims, comprising
a laser source for generating a pump wave (1, 5, 13),
a converter for generating at least two mixing waves (1, 2, 3, 5, 7, 13, 14) of defined frequency spacing on the basis of the pump wave (1, 5, 13), wherein the pump wave (1, 5, 13) can form one of the mixing waves (1, 2, 3, 5, 7, 13, 14),
wherein the converter comprises an optical nonlinear crystal, in wich the pumpwave generates Raman scattering,
**characterized in**
**that** the crystal is a resonator, in which a frequency mixer is integrated for mixing the mixing waves (1, 2, 3, 5, 7, 13, 14) into a carrier wave (15) lying in the frequency range between 0.1 and 10 terahertz, and
**that** the crystal is subject to a phase matching in such a manner, that the crystal operates as a resonator and the difference frequency mixing occurs within the crystal at the same time.

6. Arrangement according to claim 5,
**characterized in**
**that** the laser source generates laser light having a frequency in or close to the visible range.

7. The assembly of claim 5 or 6,
**characterized in**
**that** the laser source and the converter are combined in one laser, the beam path of which is located within a resonator (12).

## Revendications

1. Procédé pour la production d'une onde porteuse électromagnétique (15) adaptée pour la transmission de données sans fil dans la plage de fréquences comprise entre 0,1 et 10 térahertz,
dans lequel, au moyen d'une onde de pompage électromagnétique (1, 5, 13), au cours d'un processus de production, au moins deux ondes de mélange (1, 2, 3, 5, 7, 13, 14) sont produites avec une différence de fréquence définie, l'onde de pompage (1, 5, 13) elle-même pouvant former l'une des ondes de mélange (1, 2, 3, 5, 7, 13, 14),
dans lequel l'onde porteuse (15) est produite par mélange de fréquences, en particulier par mélange de fréquences différentielles, à partir des ondes de mélange (1, 2, 3, 5, 7, 13, 14) couplées en fréquence,
**caractérisé en ce que**
au moins l'une des ondes de mélange (1, 2, 3, 5, 7, 13, 14) est produite grâce à un processus de production non linaire optiquement amorcé par l'onde de pompage (1, 5, 13), à savoir la diffusion Raman ayant lieu à l'intérieur d'un cristal (4) non linéaire, dans lequel l'une des lignes Raman (2, 3, 7, 14) est utilisée en tant que deuxième onde de mélange décalée de manière reproductible en fréquence, et
**en ce que** le cristal est soumis à une adaptation de phase de manière à ce que le cristal agisse en tant que résonateur et **en ce que** dans le cristal, le mélange de fréquences différentielles ait simultanément lieu.

2. Procédé selon la revendication 1,
**caractérisé en**
**ce que** la fréquence de l'onde de pompage (1, 5, 13) se situe dans, ou est proche de la plage de fréquences de la lumière visible.

3. Procédé selon la revendication 1 ou 2,
**caractérisé en**
**ce que**, en guise de prescription pour la production des ondes de mélange, on utilise un processus laser où un deuxième résonateur (12) est introduit, dans lequel le processus laser produit deux ondes lumineuses avec un écart de fréquences compris entre 0,1 et 10 THz.

4. Procédé selon l'une des revendications précédentes,
**caractérisé en**
**ce que**, pour la transmission d'informations au moyen d'une modulation d'amplitude ou de fréquence ou de phase ou de polarisation, de l'information est modulée sur l'onde porteuse (15).

5. Dispositif pour l'exécution du procédé selon l'une des revendications précédentes, comprenant
une source laser pour la production d'une onde de pompage (1,5,13),
un convertisseur pour la production d'au moins deux ondes de mélange (1, 2, 3, 5, 7, 13, 14) à différence définie de fréquence sur la base de l'onde de pompage (1, 5, 13), dans lequel l'onde de pompage (1, 5, 13) peut former l'une des ondes de mélange (1, 2, 3, 5, 7, 13, 14), dans lequel le convertisseur présente un cristal non linéaire optiquement dans lequel l'onde de pompage produit une diffusion Raman,
**caractérisé en ce que**
le cristal est un résonateur dans lequel un mélangeur de fréquences est intégré pour le mélange des ondes de mélange (1, 2, 3, 5, 7, 13, 14) pour donner une onde porteuse (15) située dans la plage de fréquences comprise entre 0,1 et 10 térahertz, et
**en ce que** le cristal est soumis à une adaptation de phase de manière à ce que le cristal agisse en tant que résonateur et que dans le cristal, le mélange de fréquences différentielles ait simultanément lieu.

6. Dispositif selon la revendication 5,
**caractérisé en**
**ce que** la source laser produit de la lumière laser avec une fréquence dans, ou proche de la plage visible.

7. Dispositif selon la revendication 5 ou 6,
**caractérisé en**
**ce que** la source laser et le convertisseur sont réunis dans le laser dans la trajectoire du faisceau duquel se trouve un résonateur (12).
